# EUROPÄISCHE PATENTSCHRIFT

(11) **EP 1 948 960 B1**
(45) Veröffentlichungstag und Bekanntmachung des Hinweises auf die Patenterteilung: **21.10.2009**
(21) Anmeldenummer: 06828510.5
(22) Anmeldetag: 04.11.2006
(51) Int. Cl.: F16F 1/368

(54) **BLATTFEDER AUS EINEM FASERVERBUNDWERKSTOFF**
LEAF SPRING CONSISTING OF A FIBRE-COMPOSITE MATERIAL
RESSORT A LAMES FABRIQUE DANS UN MATERIAU COMPOSITE RENFORCE PAR DES FIBRES

(30) Priorität: 12.11.2005 DE 102005054376
(43) Veröffentlichungstag der Anmeldung: 30.07.2008
(73) Patentinhaber: IFC Composite GmbH, 39340 Haldensleben (DE)
(72) Erfinder: AULICH, Clemens, 38159 Vechelde (DE); FÖRSTER, Rainer, 51519 Odenthal-Voiswink (DE); KEMPE, Heiko, 39112 Magdeburg (DE)
(74) Vertreter: Kurtz, Laurent Charles Edmond
(86) Internationale Anmeldenummer: PCT/DE2006/001937
(87) Internationale Veröffentlichungsnummer: WO 2007/054067

(56) Entgegenhaltungen:
- DE-A1-102004 010 768
- JP-A- 59 054 833

## Beschreibung

Die Erfindung betrifft eine Blattfeder aus einem Faserverbundwerkstoff gemäß dem Oberbegriff des Patentanspruchs 1.

Blattfedern werden üblicherweise für Radaufhängungen an einem Fahrzeug verwendet, um dieses gegen unebene Gelände- bzw. Fahrwegbeschaffenheiten abzufedern. Solche Fahrzeuge können insbesondere Personenkraftwagen, Lastkraftwagen und andere Nutzfahrzeuge, aber auch Schienenfahrzeuge und dergleichen sein.

Seit langem bekannt sind Blattfedern aus Stahl. Bei diesen sind einzelne, schmale Stahlbleche mit kleiner werdenden Längen übereinander gelegt, um eine variable Federkonstante bei zunehmender Belastung zu erreichen. Durch Klammerungen und/oder Schraubverbindungen sind die Bleche der Blattfedern zu einem Paket verbunden. Bei der Montage einer Blattfeder in einem Kraftfahrzeug erfolgt diese beispielsweise quer zur Fahrtrichtung, wobei der mittlere Bereich derselben an der Fahrtzeugkarosserie festgelegt ist, während die beiden axialen Enden der Blattfeder im Bereich der Aufhängung des rechten bzw. des linken Fahrzeugrades angeordnet sind. Wenngleich eine metallische Blattfeder vergleichsweise kostengünstig herstellbar und zuverlässig im Betrieb ist, so ist eine solche jedoch nachteilig schwer, welches zu einem relativ hohen Fahrzeuggewicht beiträgt und damit letztlich einen erhöhten Kraftstoffverbrauch verursacht.

Bekannt sind auch Blattfedern aus Faserverbundmaterialien, welche beispielsweise aus mit Kunstharz getränkten Glas- oder Kohlenstofffasern gebildet sind und bei gleicher Größe sowie vergleichbaren Federeigenschaften erheblich weniger Gewicht aufweisen als Stahl-Blattfedern. Solche Faserverbund-Blattfedern werden beispielsweise aus einzelnen harzgetränkten Faserlagen hergestellt, die unter dem Begriff "Prepreg" bekannt sind. Diese Prepregs werden in der gewünschten Gestalt gefertigt und/oder zugeschnitten und übereinander in eine Pressform eingelegt, die den Abmessungen der Blattfeder entspricht. Anschließend wird die Roh-Blattfeder in der Pressform unter Einwirkung von Druck und Wärme ausgehärtet.

Aus der DE 102 21 589 A1 ist eine Blattfeder aus einem Faserverbundmaterial bekannt, die einstückig aus einem zentralen Bogenabschnitt und endseitig aus peripheren Abschnitten besteht. Die peripheren Abschnitte besitzen an ihrem jeweiligen axialen Ende eine Öse mit einer Öffnung zur Aufnahme eines Bolzens zum Zwecke der Befestigung der Blattfeder am Fahrzeugchassis. Nachteilig hierbei ist die Einbringung der Befestigungsöse in die Blattfeder, die nur durch eine konstruktiv aufwendige Pressform oder durch einen die Fasern durchtrennenden Stanzvorgang zu realisieren ist.

Bei anderen Blattfederkonstruktionen aus Faserverbundwerkstoffen sind die Endabschnitte angeschrägt. Dabei wird der jeweilige Endabschnitt nach dem Aushärten der Blattfeder der angeschrägten Form entsprechend zurechtgeschnitten. Dies hat zur Folge, dass auch die Fasern des Werkstoffes angeschnitten werden. Die Schnittstellen führen bei Dauerwechselbelastungen der Blattfeder häufig zu Rissen, die von den Schnittstellen ausgehen und im Wesentlichen parallel zur Längserstreckung der Fasern verlaufen. Diese Risse wiederum können zum Bruch der Blattfeder führen.

Aus der EP 0 093 707 B1 beziehungsweise der dazu parallelen US 4,557,500 B1 ist eine Blattfeder aus einem Faserverbundmaterial bekannt, die an ihren axialen Enden schmaler und dicker als in einem zentralen, rechteckigen Abschnitt ausgebildet ist. Der Bereich der axialen Enden der Blattfeder kann in Draufsicht dabei etwa trapezförmig ausgebildet sein. Die Fläche von rechtwinkligen Querschnitten der Blattfeder von einem Federende bis zu dem anderen Federende kann gemäß einer anderen Variante konstant sein. Bei einer anderen Bauart dieser Blattfeder sind die Verbundfasem von einem bis zum anderen axialen Ende ungeschnitten. Die Geometrie der Blattfeder wird während deren Herstellung durch Pressformen erzeugt.

Außerdem ist aus der DE 10 2004 010 768 A1 der Anmelderin eine Blattfeder aus einem Faserverbundwerkstoff mit einem zentralen Längsabschnitt und axialen Enden für eine Radaufhängung an einem Fahrzeug bekannt, bei der die axialen Enden hinsichtlich der Blattfederbreite sich verjüngend ausgebildet sind, und bei der axial ausgerichtete Fasern des Faserverbundwerkstoffs ungekürzt bis zur Abschlusskante der Blattfeder geführt sind. Außerdem ist bei dieser Blattfeder vorgesehen, dass sie aus harzgetränkten Faserlagen aufgebaut ist, die bei der Herstellung der Blattfeder an ihren axialen Enden in einer Draufsicht eine V-förmige Geometrie bzw. einen V-förmigen Einschnitt aufweisen und somit jeweils zwei quer zur Längserstreckung der Blattfeder ausgebildete Schenkel bilden. Diese beiden Schenkel werden im Herstellprozess eng-aneinandergelegt und ausgehärtet, so dass die fertig gestellte Blattfeder im Bereich ihrer Enden etwa trapezförmig ausgebildet ist und keine Materialaufdickung in diesem Bereich aufweist.

Aus dieser Druckschrift ist zudem bekannt, dass die Blattfeder in ihrem zentralen Bereich durch geometrisch einfache, rechteckige Faserlagen hinsichtlich deren Bauteildicke verstärkt werden kann, während zur Ausbildung der V-förmigen axialen Enden der Blattfeder entsprechend ausgebildete und über die gesamte Bauteillänge geführte Faserlagen verwendet werden.

Eine Blattfeder gemäß der DE 10 2004 010 768 A1 ist mit einigen Vorteilen verbunden, da diese über beinahe ihre gesamt Länge im Wesentlichen konstante Querschnittsflächen sowie eine weitgehend konstante Dicke mit am axialen Ende verringerter Breite aufweisen kann, ohne dass dieselbe an ihren axialen Enden beschnitten werden muss.

Bei bauteilkundlichen Untersuchungen an solchen Blattfedern hat sich jedoch gezeigt, dass während deren Herstellung beim Umformen der Schenkel an den V-förmigen Enden und anschließenden Pressen der Blattfeder ein unzureichender Abfluss von Harz des Faserverbundwerkstoffs aus diesem Endbereich der Blattfeder erfolgte. Zudem zeigte sich, dass die Fasern in diesem Bereich nur ungenügend längs gestreckt ausgerichtet waren, welches die Belastungseigenschaften der Blattfeder verringerte.

Der Erfindung liegt daher die Aufgabe zugrunde, eine Blattfeder gemäß der DE 10 2004 010 768 A1 derart weiterzubilden, dass während deren Herstellung sowie in der fertigen Blattfeder in allen Bereichen ein vorgegebenes Verhältnis von Fasern und Harz vorliegt, und dass die Fasern überall ungewellt bzw. lang gestreckt ausgerichtet sind.

Die Lösung dieser Aufgabe ergibt sich aus den Merkmalen des Anspruchs 1. Vorteilhafte Ausgestaltungen und Weiterbildungen der Erfindung sind den Unteransprüchen entnehmbar.

Der Erfindung liegt die überraschende Erkenntnis zugrunde, dass durch eine Verringerung der unidirektionalen Fasern im Bereich der axialen Enden der Blattfeder im Vergleich zu benachbarten Bereichen bei deren Herstellung sowohl ein verbesserter Harzabfluss und in deren Folge auch die gewünschte Streckung der Fasern in diesem Blattfederbereich erreichbar ist.

Demnach betrifft die Erfindung eine Blattfeder aus einem Faserverbundwerkstoff mit einem zentralen Längsabschnitt und zwei daran anschließende axiale Endabschnitte für eine Radaufhängung an einem Fahrzeug, bei der die Endabschnitte hinsichtlich der Blattfederbreite sich verjüngend ausgebildet sind, wobei die Blattfeder aus harzgetränkten Faserlagen aufgebaut ist, wobei sich axial ausgerichtete erste Fasern des Faserverbundwerkstoffs ungekürzt bis zu den beiden axialen Enden der Blattfeder erstrecken, und bei der die axialen Enden der noch nicht fertig gestellten Roh-Blattfeder in der Draufsicht eine im Wesentlichen V-förmige Geometrie bzw. einen im Wesentlichen V-förmigen Einschnitt aufweisen und somit axial jeweils zwei quer zur Längserstreckung der Roh-Blattfeder ausgebildete Schenkel bilden, wobei diese Schenkel in der fertiggestellten Blattfeder eng aneinander liegen.

Zur Lösung der gestellten Aufgabe ist zusätzlich vorgesehen, dass im Bereich der axialen Enden zumindest der Roh-Blattfeder der Faseranteil in derselben kleiner ist als in dazu axial benachbarten Bereichen.

Durch diese in Kenntnis der Erfindung einfache Maßnahme wird erreicht, dass bei einem Aneinanderpressen der Schenkel der Roh-Blattfeder ein Stau beim axialen Abfluss des Kunstharzes aus derselben vermieden wird.

Um eine Blattfeder gemäß der Erfindung besonders vorteilhaft herstellen zu können, ist gemäß einer Weiterbildung der grundlegenden Idee vorgesehen, dass in den zu den axialen Enden axial benachbarten Bereichen zweite, längsgerichtete Fasern in der Blattfeder angeordnet sind, die einen konstanten Abstand oder einen in Richtung zur Mittellängsachse der Blattfeder abnehmenden Abstand zu diesen axialen Enden einhalten. Konkrete Ausführungsformen dazu sind weiter unten beschrieben.

Eine Blattfeder-gemäß der Erfindung ist auch **dadurch gekennzeichnet, dass** die ersten Fasern und die zweiten Fasern lagenweise übereinander in der Blattfeder angeordnet sind. Dabei sind bevorzugt die Lagen der ersten Fasern und der zweiten Fasern durch vorgefertigte, lang gestreckte Prepregs gebildet, wobei in der Blattfeder mehrere Prepregs mit den ersten Fasern übereinander abgelegt sind, dass darauf dann ein Prepreg mit den zweiten Fasern folgt, und dass auf letzteren Prepreg dann wieder eine oder mehrere Lagen Prepregs mit den ersten Fasern abgelegt sind, worauf dann erneut ein Prepreg mit den zweiten Fasern folgt, und so weiter. Die genaue Anzahl der jeweils übereinander abgelegten Prepregs hängt von den Abmessungen der Blattfeder und den technischen Anforderungen an dieselbe ab.

Gemäß einer anderen Ausgestaltung der Erfindung ist vorgesehen, dass die Prepregs mit den zweiten Fasern aus derselben endlosen Materialbahn abgeschnitten sind, wie die Prepregs der ersten Fasern. Die jeweiligen Prepregs können sich dabei hinsichtlich der Schnittkantengeometrie und deren Länge unterschieden.

Eine Blattfeder gemäß der Erfindung ist so aufgebaut, dass der Abstand der zweiten Fasern von den axialen Enden der Roh-Blattfeder derart gewählt ist, dass bei einem Zusammenführen der Schenkel unter Druck nur ein vorbestimmter Harzanteil in der Blattfeder verbleibt, sowie die von einem Ende bis zum anderen Ende der Blattfeder verlaufenden ersten Fasern durch das abfließende überschüssige Kunstharz längsgestreckt ausgerichtet werden oder längsgestreckt bleiben.

Um zu erreichen, dass die noch nicht zusammengefügten Schenkel der Roh-Blattfeder einen geringeren Faseranteil haben als die axial dazu benachbarten Bereiche, kann vorgesehen sein, dass die zweiten Fasern bzw. die Prepregs mit den zweiten Fasern untereinander gleichlang oder unterschiedlich lang sind. Bei unterschiedlich langen zweiten Fasern halten diese einen vorbestimmten, im Wesentlichen konstanten axialen Abstand zum rechts- und linksseitigen Ende der Roh-Blattfeder ein. Da die axialen Endbereiche der Roh-Blattfeder etwa schwalbenschanzförmig ausgebildet sind, weist demnach eine Lage von zweiten Fasern bzw. ein Prepreg mit den zweiten Fasern ebenfalls diese V-förmige Endgeometrie auf. Bei gleich langen zweiten Fasern ist der axiale Abstand dieser Fasern zu den beiden axialen Enden unterschiedlich, da die Roh-Blattfeder, wie erläutert, beidseitig eine V-förmige Endgeometrie aufweist. Hierauf wird weiter unten im Zusammenhang mit konkreten Ausführungsbeispielen eingegangen.

Gemäß einer anderen Weiterbildung der Erfindung ist vorgesehen, dass die zweiten Fasern in zwei Verstärkungsabschnitten zwischen den Endbereichen der Blattfeder angeordnet sind. Diese Verstärkungsabschnitte umfassen bevorzugt auch die Befestigungspunkte zur Befestigung der Blattfeder an einer Fahrzeugkarosserie und/oder an der Fahrwerksaufhängung. In einer Ausführungsform sind zwei symmetrisch außermittige Befestigungspunkte zur Befestigung der Blattfeder an einer Fahrzeugkarosserie und zwei endseitige Befestigungspunkte zur Verbindung der Blattfeder mit Radaufhängungen vorgesehen.

Gemäß einem anderen Merkmal dieser Blattfeder ist vorgesehen, dass zwischen den Verstärkungsabschnitten ein Mittelabschnitt ausgebildet ist, in dem keine zweiten Fasern bzw. Prepregs mit den zweiten Fasern vorhanden sind.

Schließlich kann vorgesehen sein, dass die axialen Enden zumindest der Roh-Blattfeder im Wesentlichen zur Längsachse der Blattfeder rechtwinklige Schnittkanten oder im Wesentlichen abgerundete axiale Enden aufweist.

Zur Verdeutlichung der Erfindung ist der Beschreibung eine Zeichnung beigefügt. In dieser zeigt
- Fig.1: eine schematische Draufsicht auf Faserlagen in einer Roh- Blattfeder gemäß der Erfindung mit ungleichlangen ersten Fasern und gleichlangen zweiten Fasern,
- Fig. 2: eine Roh-Blattfederwie in Fig. 1, jedoch mit unterschiedlich lan- gen zweiten Fasern,
- Fig. 3: eine Roh-Blattfeder ähnlich wie in Fig. 1, jedoch mit spitzwinkligen Schenkeln an den jeweiligen axialen Enden sowie mit gleichlan- gen zweiten Fasern in zwei seitlichen Verstärkungsabschnitten,
- Fig. 4: eine schematische Draufsicht auf eine fertig gestellte Blattfeder mit zwei seitlichen Verstärkungsabschnitten und vergleichsweise spitzen axialen Enden, und
- Fig. 5: eine fertig gestellte Blattfeder, dargestellt wie in Fig. 4, jedoch mit gleichlangen zweiten Fasern und abgerundeten axialen Enden.

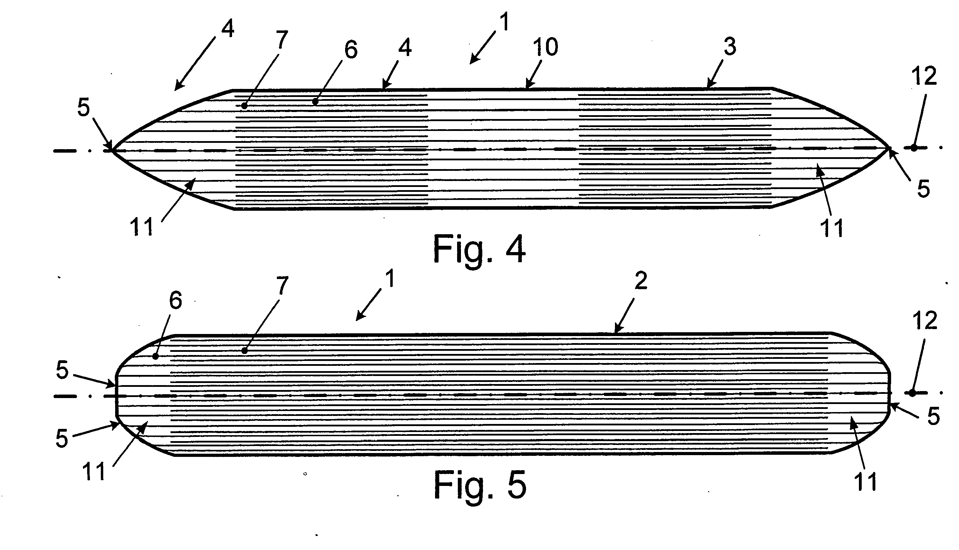

Die in schematischer Draufsicht dargestellten Blattfedern 1 gemäß den Figuren 4 und 5 sind für eine nicht dargestellte Radaufhängung an einem ebenfalls nicht gezeigten Fahrzeug vorgesehen. Sie bestehen aus einer Mehrzahl von mit Harz getränkten und übereinander gelegten unidirektionalen Faserlagen bzw. aus vorgefertigten Prepregs, die in einem Herstellverfahren in einer Pressform in an sich bekannter Weise miteinander verbunden sind. Beide Blattfedern 1 weisen unidirektionale erste Fasern 6 auf, die sich ungeschnitten von einem axialen Ende 5 bis zu dem gegenüberliegenden axialen Ende 5 erstrecken. Außerdem sind diese Blattfedern 1 mit unidirektionalen zweiten Fasern 7 versehen, die sich nur über einen Teil der Blattfederlänge, vorzugsweise die Befestigungsbereiche, erstrecken und unterschiedliche Abstände zu den axialen Enden 5 aufweisen.

Die ersten Fasern 6 und die zweiten Fasern 7 bzw. die Prepregs, welche die ersten Fasern 6 bzw. zweiten Fasern 7 enthalten, sind vorzugsweise von der gleichen kontinuierlich hergestellten Materialbahn abgeschnitten und in der Pressform nach einem Ablegeplan mit unterschiedlicher Anzahl wechselweise übereinander gelegt. Die Fasern selbst bestehen beispielsweise als Glas, Kohlenstoff oder Aramid.

Die Blattfeder 1 gemäß Fig. 4 weist zudem weitgehend spitze Enden 5 auf, während diese Enden 5 bei der Blattfeder gemäß Fig. 5 weitgehend abgerundet sind und jeweils eine quer zur Längserstreckung derselben ausgerichtete Kante haben.

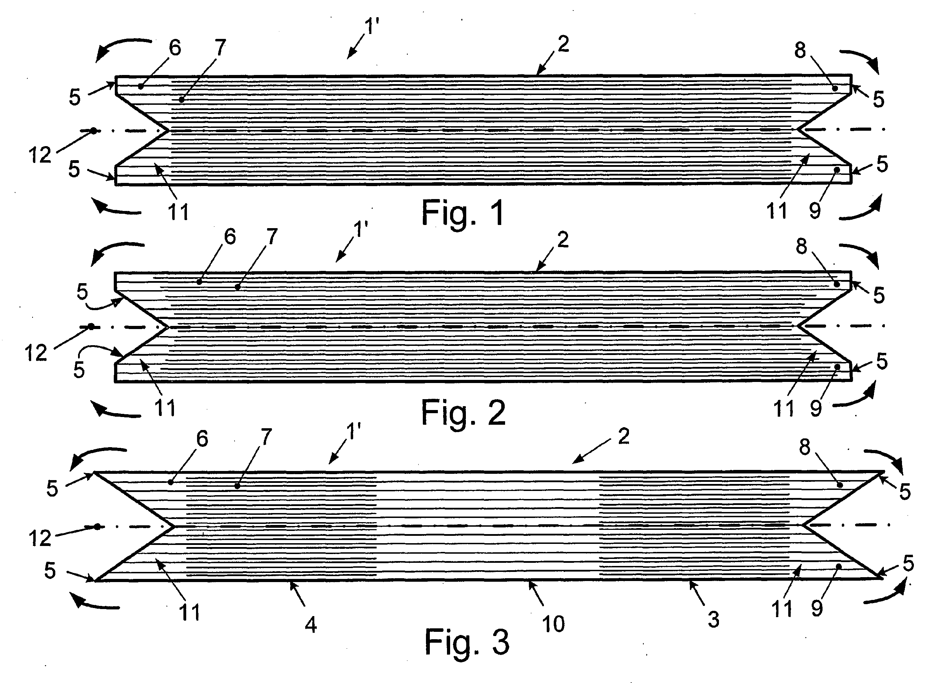

Die Herstellung und verschiedene Aufbauvarianten der Blattfedern gemäß der Erfindung sind in den Figuren 1 bis 3 dargestellt, auf die nachfolgend eingegangen wird. Wie diese Figuren verdeutlichen, wird die zunächst eine so genannte Roh-Blattfeder 1' durch Übereinanderlegen von Lagen unidirektionaler erster Fasern 6 aufgebaut, welche mit einem Kunstharz, beispielsweise einem Epoxydharz, imprägniert sind. Vorzugsweise sind diese ersten Fasern 6 in als . Prepregs bekannte harzgetränkte Faserlagen zusammengefasst, welche eine vorbestimmte Dicke aufweisen, die deutlich kleiner ist als die Dicke der fertigen Blattfeder 1.

Wie bereits erwähnt, erstrecken sich die ersten Fasern bzw. die Prepregs mit den ersten Fasern 6 ungeschnitten zwischen den beiden axialen Enden 5 der Roh-Blattfeder 1'. Zur Ausbildung der schwalbenschwanzförmigen axialen Enden 5 mit den beiden endseitigen Schenkeln 8 und 9 sind die ersten Fasern 6 an ihren Enden so beschnitten, dass eine diesbezügliche Endgeometrie der Roh-Blattfeder 1' entsteht. Zum Aufbau einer solchen Blattfeder 1' werden ersten Fasern 6 bzw. die Prepregs mit den ersten Fasern 6 in vorbestimmter Anzahl in eine nicht dargestellte Pressform abgelegt. Anschließend werden auf diesen Stapel in vorbestimmter Schichtdicke unidirektionale zweite Fasern 7 bzw. Prepregs mit den zweiten Fasern 7 abgelegt.

Diese zweiten Fasern 7 erstrecken sich nicht bis an die axialen Enden 5 der Roh-Blattfeder 1', sondern halten zu diesen einen vorbestimmten axialen Abstand. Bei der Roh-Blattfeder 1 gemäß Fig. 1 und der fertiggestellten Blattfeder 1 gemäß Fig. 5 weisen die zweiten Fasern 7 alle die gleiche Länge auf. Bei der Roh-Blattfeder 1' gemäß Fig. 1 nimmt der axiale Abstand der zweiten Fasern 7 von den jeweils zugeordneten axialen Enden von der Außenseite des Längsabschnitt 2 in Richtung zur Längsachse 12 der Blattfeder 1' erkennbar ab.

Bei der in Fig. 2 dargestellten zweiten Variante weisen die zweiten Fasern 7 bzw. die Prepregs mit den zweiten Fasern 7 einen weitgehend konstanten axialen Abstand zu den zugeordneten axialen Enden 5 der Roh-Blattfeder 1' auf. Sie ragen dabei mehr oder weniger weit axial bis in die beiden endseitigen Schenkel 8, 9 hinein. Fig. 2 zeigt dabei vereinfacht rechts- und linksseitig zwei Ausführungsformen, bei denen in der Realität die beiden axialen Enden der Lagen der zweiten Fasern 7 geometrisch identisch ausgebildet sind, also mit dem gleichen Schnittwerkzeug abgelängt wurden.

Fig. 3 zeigt schließlich eine Roh-Blattfeder 1', bei der zwischen Lagen mit den ersten Fasern 6 vergleichsweise kurze Lagen mit den zweiten Fasern 7 eingebettet sind. Die zweiten Fasern 7 bzw. die Prepregs mit den zweiten Fasern 7 weisen die gleiche Länge bzw. gerade Schnittkanten auf, so dass die axialen Enden der zweiten Fasern 7 von der Außenseite des Längsabschnitts 2 in Richtung zur Längsachse 12 der Roh-Blattfeder 1' unterschiedliche, nämlich immer kürzer werdende Abstände zu den zugeordneten axialen Enden 5 aufweisen. Die zweiten Fasern 7 bzw. die die zweiten Fasern 7 enthaltenden Prepregs sind dabei in den Befestigungsbereichen 3, 4 der fertigen Blattfeder 1 gemäß Fig. 4 angeordnet. Zwischen diesen Befestigungsbereichen 3, 4 ist ein Mittelabschnitt 10 ausgebildet, der frei von zweiten Fasern 7 ist.

Die ersten Fasern 6 und zweiten Fasern 7 werden wie beschrieben in Form von Faserlagen bzw. Prepregs so in der bereits genannten Pressform abgelegt, dass die Schenkel 8 und 9 an den axialen Enden 5 der Roh-Blattfeder 1' gemäß den gebogenen Pfeilen in Fig. 1 bis 3 in Richtung zur Längsachse 12 geschwenkt und eng aneinander gelegt werden. Dadurch, dass in diesen Endbereichen 11 der Roh-Blattfeder 1' nur die ersten Fasern 6 bzw. ein reduzierter Anteil von zweiten Fasern 7 vorhanden ist, führt das Zusammenfügen der genannten Schenkel 8, 9 nicht zu einen Stau beim Abfließen des Kunstharzes während des Pressvorgangs. Zudem wird durch das axiale Abfließen des Kunstharzes erreicht, dass die ersten Fasern 6 in den Endabschnitten der Roh-Blattfeder 1' axial gestreckt werden oder bleiben, welches eine Voraussetzung für sehr gute mechanische Eigenschaften der fertigen Blattfeder 1 ist. Der noch nasse Aufbau der Roh-Blattfeder 1' wird dann in der Pressform unter Einfluss eines Pressdrucks und Wärme ausgehärtet.

Welche der vorgestellten Varianten hinsichtlich der Länge und Anordnung der zweiten Fasern 7 sowie hinsichtlich der Anzahl und Abfolge der Faserlagen genutzt wird, hängt von dem jeweiligen Anwendungsfall ab und liegt im Belieben des Anwenders.

### Bezugszeichen

- 1: Blattfeder
- 2: Längsabschnitt
- 3: Verstärkungsabschnitt
- 4: Verstärkungsabschnitt
- 5: Axiale Ende
- 6: Erste Fasern
- 7: Zweite Fasern
- 8: Schenkel
- 9: Schenkel
- 10: Mittelabschnitt
- 11: Endbereich
- 12: Längsachse der Blattfeder

## Patentansprüche

1. Blattfeder (1) aus einem Faserverbundwerkstoff mit einem zentralen Längsabschnitt (2) und zwei daran anschließende axiale Endabschnitte für eine Radaufhängung an einem Fahrzeug, bei der die Endabschnitte hinsichtlich der Blattfederbreite sich verjüngend ausgebildet sind, wobei die Blattfeder (1) aus harzgetränkten Faserlagen aufgebaut ist, wobei sich axial ausgerichtete erste Fasern (6) des Faserverbundwerkstoffs ungekürzt bis zu den beiden axialen Enden (5) der Blattfeder (1) erstrecken, und bei der die axialen Enden (5) der noch nicht fertig gestellten Roh-Blattfeder (1') in der Draufsicht eine im Wesentlichen V-förmige Geometrie bzw. einen im Wesentlichen V-förmigen Einschnitt aufweisen und somit axial jeweils zwei quer zur Längserstreckung der Roh-Blattfeder (1') ausgebildete Schenkel (8, 9) bilden, wobei diese Schenkel (8, 9) in der fertiggestellten Blattfeder (1) eng aneinander liegen, **dadurch gekennzeichnet, dass** im Bereich (11) der axialen Enden (5) zumindest der Roh-Blattfeder (1') der Faseranteil in derselben kleiner ist als in dazu axial benachbarten Bereichen (2, 3, 4).

2. Blattfeder nach Anspruch 1, **dadurch gekennzeichnet, dass** in dem zu den axialen Enden (5) benachbarten Bereichen (2, 3, 4) zweite längsgerichtete Fasern (7) in der Blattfeder (1, 1') angeordnet sind, die einen konstanten Abstand oder einen in Richtung zur Längsachse (12) der Blattfeder (1,1') abnehmenden Abstand zu den axialen Enden (5) einhalten.

3. Blattfeder nach Anspruch 2, **dadurch gekennzeichnet, dass** die ersten Fasern (6) und die zweiten Fasern (7) lagenweise übereinander in der Blattfeder (1, 1') angeordnet sind.

4. Blattfeder nach Anspruch 3, **dadurch gekennzeichnet, dass** die Lagen der ersten Fasern (6) und der zweiten Fasern (7) durch vorgefertigte, lang gestreckte Prepregs gebildet sind, wobei in der Blattfeder (1, 1') mehrere Prepregs mit den ersten Fasern (6) übereinander abgelegt sind, worauf ein Prepreg mit den zweiten Fasern (7) folgt, darauf folgend ein oder mehrere Lagen Prepregs mit den ersten Fasern (6), dann folgend ein Prepreg mit den zweiten Fasern (7), und so weiter.

5. Blattfeder nach Anspruch 4, **dadurch gekennzeichnet, dass** die Prepregs mit den zweiten Fasern (7) aus derselben endlosen Materialbahn abgeschnitten sind, wie die die Prepregs der ersten Fasern (6).

6. Blattfeder nach zumindest einem der Ansprüche 2 bis 5, **dadurch gekennzeichnet, dass** der Abstand der zweiten Fasern (7) von den axialen Enden (5) der Roh-Blattfeder (1') derart gewählt ist, dass bei einem Zusammenführen der Schenkel (8, 9) unter Druck nur ein vorbestimmter Harzanteil in der Blattfeder (1') verbleibt, sowie die von einem Ende (5) bis zum anderen Ende (5) der Blattfeder (1) verlaufenden ersten Fasern (6) längsgestreckt ausgerichtet werden oder bleiben.

7. Blattfeder nach zumindest einem der Ansprüche 2 bis 6, **dadurch gekennzeichnet, dass** die zweiten Fasern (7) untereinander gleichlang oder unterschiedlich lang sind.

8. Blattfeder nach zumindest einem der Ansprüche 2 bis 7, **dadurch gekennzeichnet, dass** die zweiten Fasern (7) in einem Längsabschnitt (2) der Blattfeder (1, 1') angeordnet sind, welcher die Befestigungspunkte für eine Befestigung der Blattfeder (1) an einer Fahrzeugkarosserie und/oder an der Fahrwerksaufhängung umfasst.

9. Blattfeder nach Anspruch 8, **dadurch gekennzeichnet, dass** der Längsabschnitt (2) ein Mittelabschnitt (10) und zwei rechtsseitig bzw. linksseitig davon angeordnete Verstärkungsabschnitte (3, 4) aufweist, wobei die zweiten Fasern (7) nur in den Verstärkungsabschnitten (3, 4) der Blattfeder (1, 1') angeordnet sind.

10. Blattfeder nach zumindest einem der Ansprüche 1 bis 9, **dadurch gekennzeichnet, dass** die axialen Enden (5) zumindest der Roh-Blattfeder (1, 1') durch im Wesentlichen zur Längsachse (12) der Blattfeder (1) rechtwinklige Schnittkanten oder im Wesentlichen abgerundet gebildet sind.

## Claims

1. A leaf spring (1) consisting of a fibre-composite material with a central longitudinal section (2) and two axial end sections connected thereto for a wheel suspension on a vehicle, in which the end sections are of tapering construction with respect to the width of the leaf spring, wherein the leaf spring (1) is constructed of resin-impregnated fibre layers, whereby axially aligned first fibres (6) of the fibre-composite material extend in unshortened form to the two axial ends of the leaf spring (1) and in which the axial ends (5) of the uncompleted semi-finished leaf spring (1') have a substantially V-shaped geometry or a substantially V-shaped recess, in plan view, and thus define axially two respective limbs (8, 9) extending transverse to the length of the semi-finished leaf spring, wherein these limbs (8, 9) closely adjoin one another in the finished leaf spring (1), **characterised in that** in the region (11) of the axial ends (5) of at least the semi-finished leaf spring (1'), the fibre content of the same is smaller than in regions (2, 3, 4) axially adjacent thereto.

2. A leaf spring as claimed in Claim 1, **characterised in that** arranged in the regions (2, 3, 4) adjacent to the axial ends (5) there are second longitudinally directed fibres (7) in the leaf spring (1, 1'), which maintain a constant distance or a decreasing distance, in the direction of the longitudinal axis (12) of the leaf spring (1, 1') from the axial ends (5).

3. A leaf spring as claimed in Claim 2, **characterised in that** the first fibres (6) and the second fibres (7) are arranged in layers above one another in the leaf spring (1, 1').

4. A leaf spring as claimed in Claim 3, **characterised in that** the layers of the first fibres (6) and of the second fibres (7) are constituted by prefabricated, stretched prepregs, wherein in the leaf spring (1, 1') a plurality of prepregs are deposited above one another with the first fibres (6), whereafter a prepreg with the second fibres (7) follows, after this one or more layers of prepregs with the first fibres (6) and then a prepreg with the second fibres (7) and so on.

5. A leaf spring as claimed in Claim 4, **characterised in that** the prepregs with the second fibres (7) are cut out of the same endless strip of material as the prepregs of the first fibres (6).

6. A leaf spring as claimed in at least one of Claims 2 to 5, **characterised in that** the distance of the second fibres (7) from the axial ends (5) of the semi-finished leaf spring (1') is so selected that when the limbs (8, 9) are moved together under pressure, only a predetermined resin content remains in the leaf spring (1') and the first fibres (6) extending from one end (5) to the other end (5) of the leaf spring (1) are aligned or remain extended.

7. A leaf spring as claimed in at least one of Claims 2 to 6, **characterised in that** the second fibres (7) are of the same length as one another or of different length.

8. A leaf spring as claimed in at least one of Claims 2 to 7, **characterised in that** the second fibres (7) are arranged in a longitudinal section (2) of the leaf spring (1, 1') which includes the connection points for connecting the leaf spring (1) to a vehicle bodywork and/or to the vehicle suspension.

9. A leaf spring as claimed in Claim 8, **characterised in that** the longitudinal section (2) has a middle section (10) and two reinforcing sections (3, 4) arranged on the right-hand side and the left-hand side, respectively, thereof, wherein the second fibres (7) are arranged only in the reinforcing sections (3, 4) of the leaf spring (1, 1').

10. A leaf spring as claimed in at least one of Claims 1 to 9, **characterised in that** the axial ends (5) at least of the semi-finished leaf spring (1, 1') are constituted by cut edges substantially at right-angles to the longitudinal axis (12) of the leaf spring (1) or are substantially rounded.

## Revendications

1. Ressort à lame (1) à base d'un matériau renforcé par des fibres comprenant une section longitudinale (2) centrale et deux sections d'extrémité axiales consécutives à la première pour une suspension de roue sur un véhicule, sur lequel les sections d'extrémité sont conçues en se rétrécissant pour ce qui est de la largeur de ressort à lame, le ressort à lame (1) étant constitué à base de couches de fibres imbibées de résine, des premières fibres (6) orientées axialement du matériau renforcé par des fibres s'étirant de façon non raccourcie jusqu'aux deux extrémités (5) axiales du ressort à lame (1), et sur lequel les extrémités (5) axiales du ressort à lame brut (1') non encore achevé présentent dans la vue en élévation une géométrie sensiblement en V et une entaille sensiblement en V et forment ainsi axialement à chaque fois deux branches (8, 9) conçues transversalement à l'extension longitudinale du ressort à lame brut (1'), ces branches (8, 9) étant disposées très près les unes des autres dans le ressort à lame (1) achevé, **caractérisé en ce que**, dans la zone (11) des extrémités (5) axiales au moins du ressort à lame brut (1'), la fraction de fibre dans ce dernier est plus faible que dans des zones (2, 3, 4) voisines axialement de ces deux zones.

2. Ressort à lame selon la revendication 1, **caractérisé en ce que** dans les zones (2, 3, 4) voisines des extrémités (5) axiales, sont disposées des secondes fibres (7) longitudinales dans le ressort à lame (1, 1'), qui respectent une distance constante ou une distance décroissant en direction de l'axe longitudinal (12) du ressort à lame (1, 1') par rapport aux extrémités (5) axiales.

3. Ressort à lame selon la revendication 2, **caractérisé en ce que** les premières fibres (6) et les secondes fibres (7) sont disposées par couches les unes au-dessus des autres dans le ressort à lame (1, 1').

4. Ressort à lame selon la revendication 3, **caractérisé en ce que** les couches des premières fibres (6) et des secondes fibres (7) sont formées par des préimprégnés préfabriqués et étirés en longueur, plusieurs préimprégnés étant déposés dans la lame à ressort (1, 1') avec les premières fibres (6) les unes au-dessus des autres, après quoi on a un préimprégné avec les secondes fibres (7), ensuite une ou plusieurs couches de préimprégnés avec les premières fibres (6), ensuite un préimprégné avec les secondes fibres (7), etc.

5. Ressort à lame selon la revendication 4, **caractérisé en ce que** les préimprégnés avec les secondes fibres (7) sont découpés dans la même bande de matériau continue que celle des préimprégnés des premières fibres (6).

6. Ressort à lame selon au moins l'une quelconque des revendications 2 à 5, **caractérisé en ce que** la distance des secondes fibres (7) aux extrémités axiales (5) du ressort à lame brut (1') est choisie de telle sorte que, lors d'un regroupement des branches (8, 9), seule une fraction de résine prédéfinie reste dans la lame à ressort (1') sous pression, et les premières fibres (6) agencées d'une extrémité (5) à l'autre extrémité (5) du ressort à lame (1) sont orientées ou restent étirées en longueur.

7. Ressort à lame selon au moins l'une quelconque des revendications 2 à 6, **caractérisé en ce que** les secondes fibres (7) ont mutuellement la même longueur ou une longueur différente.

8. Ressort à lame selon au moins l'une quelconque des revendications 2 à 7, **caractérisé en ce que** les secondes fibres (7) sont disposées dans une section longitudinale (2) du ressort à lame (1, 1'), qui comporte les points de fixation pour une fixation du ressort à lame (1) sur une carrosserie de véhicule et/ou sur la suspension de châssis.

9. Ressort à lame selon la revendication 8, **caractérisé en ce que** la section longitudinale (2) présente une section centrale (10) et deux sections de renfort (3, 4) disposées côté droit ou côté gauche de cette section, les secondes fibres (7) étant disposées uniquement dans les sections de renfort (3, 4) du ressort à lame (1, 1').

10. Ressort à lame selon au moins l'une quelconque des revendications 1 à 9, **caractérisé en ce que** les extrémités (5) axiales au moins du ressort à lame brut (1, 1') sont formées par des arêtes de coupe sensiblement perpendiculaires à l'axe longitudinal (12) du ressort à lame (1) ou de façon sensiblement arrondie.
